# EUROPÄISCHE PATENTSCHRIFT

(11) **EP 2 743 243 B1**
(45) Veröffentlichungstag und Bekanntmachung des Hinweises auf die Patenterteilung: **28.02.2018**
(21) Anmeldenummer: 13192877.2
(22) Anmeldetag: 14.11.2013
(51) Int. Cl.: C04B 28/24, C04B 38/00, C01B 33/00, C04B 12/04

(54) **Verfahren zum Herstellen eines monolithischen Wärmedämmstoff-Formkörpers und Wärmedämmstoff-Formkörper**
Method for producing a monolithic moulded body made from heat insulating material and moulded body made from heat insulating material
Procédé de fabrication d'un corps moulé d'isolant thermique monolithique et corps moulé d'isolant thermique monolithique

(30) Priorität: 12.12.2012 DE 102012112136; 11.02.2013 DE 102013101320
(43) Veröffentlichungstag der Anmeldung: 18.06.2014
(73) Patentinhaber: Ledermüller, Dirk, 01109 Dresden (DE); LST Luft-, Sanitar- und Klimatechnik GmbH, 09120 Chemnitz (DE)
(72) Erfinder: Ledermüller, Dirk, 01109 Dresden (DE); Pfau, Hartmut, 09337 Hohenstein-Ernstthal (DE); Lange, Andreas, 06108 Halle/Saale (DE)
(74) Vertreter: Kaufmann, Sigfrid

(56) Entgegenhaltungen:
- DE-A1-102009 029 555
- US-A1- 2010 204 355
- US-A1- 2011 237 692
- US-A1- 2012 128 958

## Beschreibung

Die Erfindung betrifft ein Verfahren zum Herstellen eines monolithischen Wärmedämmstoff-Formkörpers, d.h. eines einstückigen Körpers aus einem thermisch isolierenden Material, sowie einen mittels des Verfahrens hergestellten Wärmedämmstoff-Formkörper.

Wärmedämmung wird verwendet, um den Wärmedurchgang an einem Objekt zu reduzieren; wobei unterschiedliche Wärmedämmstoffe eingesetzt werden können. Synthetische organische Wärmedämmstoffe, wie z.B. geschäumtes Polystyrol oder Polyurethan, weisen Wärmeleitfähigkeiten von 0,03 bis 0,04 Wm⁻¹K⁻¹ auf; natürliche organische Wärmedämmstoffe, wie z.B. Hanf, Holzwolle, Naturwolle, Kork und Zellulose zeigen zwar ausgezeichnete Werte bzgl. der CO₂-Bilanz, ihre Wärmeleitfähigkeiten liegen jedoch oberhalb von 0,04 Wm⁻¹K⁻¹. Organische Wärmedämmstoffe haben zudem den Nachteil, dass sie brennbar sind.

Die meisten anorganischen Wärmedämmstoffe, wie z.B. Mineralwolle (Glas- und Steinwolle), Schaumglas, Perlit, Keramikschaum und Blähton, sind zwar nicht brennbar, weisen jedoch auch Wärmeleitfähigkeiten von mindestens 0,03 Wm⁻¹K⁻¹, meistens sogar Wärmeleitfähigkeiten von größer als 0,04 Wm⁻¹K⁻¹ auf. Mit anorganischen SiO₂-basierenden Wärmedämmstoffen (z.B. Aerogelen, Fällungskieselsäuren, pyrogenen Kieselsäuren) können Wärmeleitfähigkeiten von 0,02 Wm⁻¹K⁻¹ und weniger erreicht werden.

So wird in DE 762 723 A ein Wärmedämmstoff aus pyrogener Kieselsäure beschrieben, bei dem in einer Knallgasflamme SiCl₄ zu SiO₂ oxidiert wird, wobei die entstehenden nanoskaligen Partikel agglomerieren und Netzwerke mit extrem geringen Dichten und geringen Wärmeleitfähigkeiten von 0,02 Wm⁻¹K⁻¹ ausbilden. Bei der Verarbeitung dieses Dämmstoffs werden allerdings lungengängige Partikel freigesetzt, was zu erheblichen gesundheitlichen Beeinträchtigungen führen kann.

Bekannt ist weiterhin aus US 2010/204355 A1 ein Verfahren zum Herstellen eines monolithischen Wärmedämmstoff-Formkörpers, wobei der Silikatprekursor mit einem Templat aus Copolymer und Salpetersäure gemischt, in eine Form gegossen und in einer geschlossenen Form bei 60 °C geliert wird. Danach wird der Formkörper in Ethanol gelagert, bei 60 °C thermisch behandelt, mit Aceton gewaschen und getrocknet. Der Formkörper wird wahlweise bei 650 °C kalziniert.
In US 2011/237692 A1 ist ein Verfahren zum Herstellen eines als Dämmstoff verwendeten Hybrid-Aerogels beschrieben. Demgemäß wird ein Silikatprecursor mit telechelischem Polymer, Wasser, Ethanol und HCl bei 50 °C gemischt. Die Mischung wird zunächst gekühlt und danach mit einer Zugabe von NH₄OH in eine Form gegossen und geliert. Nach der Gelierung wird die Mischung in einem Ethanolbad bei 60 °C wärmebehandelt. Im Anschluss wird der Formkörper gewaschen und getrocknet.

Durch die Erfindung wird ein Verfahren zum Herstellen eines monolithischen, nicht brennbaren Wärmedämmstoff-Formkörpers bereitgestellt, mittels dessen auf unkomplizierte Art und Weise großformatige Wärmedämmstoff-Formkörper mit frei wählbarer Geometrie rissfrei herstellbar sind, wobei die Wärmedämmstoff-Formkörper bei einer geringen Wärmeleitfähigkeit zugleich mit einer hohen mechanischen sowie chemischen Stabilität ausgebildet werden können. Zudem werden nach dem Verfahren hergestellte Wärmedämmstoff-Formkörper bereitgestellt.

Gemäß einem ersten Aspekt der Erfindung wird ein Verfahren zum Herstellen eines Wärmedämmstoff-Formkörpers bereitgestellt. Gemäß dem Verfahren wird zunächst ein Ausgangsmaterial bereitgestellt, das mindestens einen Silikaprekursor enthält. Das Ausgangsmaterial kann aus einem oder mehreren Silikaprekursoren bestehen oder daneben weitere Bestandteile in einer homogenen Mischung enthalten. Als Silikaprekursor können z.B. unterschiedliche Alkoxysilane und/oder Metallsilikat-Lösungen fungieren.

Das Ausgangsmaterial wird unter Einsatz von Wasser hydrolysiert, wobei insbesondere der in dem Ausgangsmaterial enthaltene Silikaprekursor hydrolysiert wird. Durch die Hydrolyse wird eine Polykondensation bzw. Vernetzung der Silikaprekursoren ausgelöst, wobei die Silikaprekursoren in ein Silikagel bzw. Kieselgel überführt werden. Diese Gelierung geht mit der Ausbildung von Poren einer ersten Porenspezies einher (im Folgenden auch als Primärporen bezeichnet).

Gemäß dem Verfahren wird durch Zusatz eines Polymers eine polymerinduzierte Phasenseparation in dem hydrolysierten Ausgangsmaterial ausgelöst. Die Phasenseparation geht mit der Ausbildung von Poren einer zweiten Porenspezies einher (im Folgenden auch als Sekundärporen bezeichnet), wobei die Sekundärporen grö-βer sind als die Primärporen und z.B. einen größeren mittleren Porendurchmesser aufweisen als die Primärporen. Die Primärporen können z.B. einen mittleren Porendurchmesser mit einem Wert von 1 nm bis 100 nm aufweisen, wohingegen die Sekundärporen z.B. einen mittleren Porendurchmesser mit einem Wert von 500 nm bis 20 pm aufweisen können. Als phasenseparierendes Polymer können z.B. Polyethylenoxid (PEO), PEO-Polypropylenoxid(PPO)-PEO Blockpolymere und Polyacrylsäuren, deren Salze sowie Polystyrolsulfonate fungieren.

Die Porengröße der ersten Porenspezies kann z.B. durch den gewählten Silikaprekursor und die Reaktionsparameter beeinflusst und kontrolliert eingestellt werden. Die Porengröße der Sekundärporen kann z.B. durch den Polymergehalt und/oder durch die Wahl des verwendeten Polymers gezielt eingestellt werden. Die Primärporen-Größe und die Sekundärporen-Größe können somit (im Wesentlichen) unabhängig voneinander eingestellt werden.

Sowohl das von den Primärporen gebildete Primärporennetzwerk als auch das von den Sekundärporen gebildete Sekundärporennetzwerk sind offenzellige Porennetzwerke, wobei das Primärporennetzwerk das gesamte Kieselgel durchsetzt und das von dem Primärporennetzwerk durchsetzte Kieselgel wiederum von dem Sekundärporennetzwerk durchsetzt ist, sodass die Wände zwischen zwei Sekundärporen mit den Primärporen durchsetzt sind. Das resultierende Kieselgel weist somit eine bimodale Porenstruktur auf (d.h. weist Poren zweier Porenspezies mit unterschiedlichen, aber innerhalb der Spezies im Wesentlichen gleich bleibenden, Porengrößen auf), wobei diese Porenstruktur zudem hierarchisch angeordnet ist (d.h. die größeren Sekundärporen sind in bzw. von dem mit den kleineren Primärporen durchsetzten Kieselgel ausgebildet).

Der Zusatz des Polymers kann vor, während oder nach der Hydrolyse erfolgen. Gemäß einer Ausführungsform wird das Polymer vor Durchführung der Hydrolyse dem Ausgangsmaterial mit dem Silikaprekursor zugesetzt. Dies ermöglicht insbesondere eine vollständige Homogenisierung der Ausgangsstoffe, d.h. ein Durchmischen des Ausgangsmaterials mit dem Polymer, vor der Hydrolyse. Es kann auch vorgesehen sein, zunächst das Polymer und gegebenenfalls die übrigen Ausgangsstoffe mit dem Wasser zu vermischen und dann den Silikaprekursor zu dieser Mischung hinzuzugeben und dadurch zu hydrolysieren. Das Polymer kann auch bereits in dem Ausgangsmaterial enthalten sein. In jedem Fall erfolgt die Phasenseparation notwendigerweise erst in dem hydrolysierten Ausgangsmaterial.

Das hydrolysierte und mit dem Polymer versetzte Ausgangsmaterial wird in eine Gießform eingebracht, wobei von der Gießform die Geometrie bzw. Form des herzustellenden Wärmedämmstoff-Formkörpers definiert ist (d.h. die Geometrie des Wärmedämmstoff-Formkörpers entspricht im Wesentlichen der Geometrie der Gießform). Das hydrolysierte Ausgangsmaterial geliert in der Gießform bei einer vorgegebenen Temperatur (im Folgenden auch als "Geliertemperatur" bezeichnet) unter Ausbildung eines Silikagel-Formkörpers, d.h. eines Formkörpers, der im Wesentlichen die Geometrie des herzustellenden Wärmedämmstoff-Formkörpers aufweist, aber aus einem Silikagel besteht.

Die Hydrolyse kann durch Zugabe einer Säure zusätzlich unterstützt werden, wobei als Säure z.B. eine anorganische Säure, z.B. eine Mineralsäure (z.B. Schwefel-, Salpeter- oder Salzsäure) oder eine organische Säure (z.B. Essigsäure, Ameisensäure) fungieren kann. Des Weiteren kann das Ausgangsmaterial einen Basenprekursor enthalten, d.h. ein Material bzw. einen Reaktanten, das/der sich oberhalb einer materialspezifischen Aktivierungstemperatur zersetzt und dabei ein basisch reagierendes Zersetzungsprodukt freisetzt. Der Basenprekursor kann z.B. Harnstoff und/oder Hirschhornsalz enthalten bzw. daraus bestehen.

Gemäß einer Ausführung erfolgt die Gelierung in der Gießform bei einer Geliertemperatur von unter 100 °C, insbesondere bei einer Temperatur von 30 °C bis 70 °C, bevorzugt bei einer Temperatur von 50 °C. Die Gelierung kann z.B. in einer gasdicht geschlossenen Reaktorkammer durchgeführt werden. Die Gelierung kann im Wesentlichen bei einem Normaldruck von 1 bar durchgeführt werden; es kann jedoch auch vorgesehen sein, die Gelierung bei einem leicht erhöhten Umgebungsdruck von z.B. bis zu 2 bar durchzuführen (die Druckerhöhung kann z.B. durch Einbringen der Gießform mit dem Silikagel in die gasdichte Reaktorkammer und Druckbeaufschlagen der Reaktorkammer mit einem Gas, bevorzugt einem Inertgas bzw. Edelgas, realisiert werden). Es hat sich gezeigt, dass ein derart erhöhter Umgebungs- bzw. Luftdruck die Gelierung positiv beeinflussen kann. Die Gelierdauer kann zwischen 3 Stunden und 3 Tagen betragen.

Das durch die Gelierung resultierende Silikagel weist eine feste Phase bzw. Komponente und eine flüssige Phase bzw. Komponente auf, wobei sowohl die Primärporen als auch die Sekundärporen von der festen Phase gebildet sind und zunächst mit der flüssigen Phase gefüllt sind. Die flüssige Phase weist Wasser als einen Hauptbestandteil auf, wobei in der flüssigen Phase zudem darin gelöste Polymeranteile und (in Abhängigkeit von den eingesetzten Ausgangsstoffen) Basenprekursoranteile sowie Säureanteile bzw. durch die Hydrolyse gebildete Spezies (z.B. Alkohole) enthalten sein können.

Zur Herstellung des eigentlichen Wärmedämmstoff-Formkörpers wird die flüssige Phase, z.B. mittels eines Wasch-Vorgangs, aus dem Silikagel-Formkörper entfernt. Indem das Silikagel zusätzlich zu den kleineren Primärporen auch die demgegenüber größeren Sekundärporen aufweist, können die beim Entfernen der flüssigen Phase aus dem Silikagel auftretenden Kapillarkräfte gering gehalten werden, indem die flüssigen Phase über die größeren Sekundärporen aus dem Silikagel austritt, wodurch auch bei einer Trocknung des Gels bei unterkritischen Parametern ein rissfreies Trocknen des Silikagel-Formkörpers möglich ist.

Erfindungsgemäß weist das Verfahren ferner den Schritt des Temperierens bzw. Erhitzens des Silikagel-Formkörpers bei einer Temperatur (im Folgenden auch als "Erhitzungstemperatur" bezeichnet) auf, die größer ist als die Geliertemperatur; wobei das Temperieren des Silikagel-Formkörpers bevorzugt in einer gasdicht geschlossenen Reaktorkammer erfolgt. Das Temperieren wird nach dem Gelieren durchgeführt, bevorzugt unmittelbar nach dem Gelieren. Während dieses Temperierschrittes kann der Silikagel-Formkörper in der Gießform verbleiben; es kann jedoch alternativ vorgesehen sein, den Silikagel-Formkörper vor dem Temperieren aus der Gießform zu entnehmen.

Falls das Ausgangsmaterial mit dem Silikaprekursor derart gewählt bzw. zusammengesetzt ist, dass es auch einen Basenprekursor aufweist, der bei Temperaturen oberhalb einer vorgegebenen Aktivierungstemperatur eine Base freisetzt, wird das Gelieren des hydrolysierten Ausgangsmaterials bei einer Geliertemperatur durchgeführt, die kleiner ist als die Aktivierungstemperatur, wohingegen das Temperieren bei einer Erhitzungstemperatur durchgeführt wird, die mindestens so groß ist wie die Aktivierungstemperatur. Als Beispiel erfolgt bei Verwendung von Harnstoff oder Hirschhornsalz als Basenprekursor die Gelierung bei einer Geliertemperatur von unter 80 °C, wohingegen das Temperieren bei einer Erhitzungstemperatur von mindestens 80 °C erfolgt, z.B. bei einer Erhitzungstemperatur von 80 °C bis 150 °C. Bei diesen Temperaturen zersetzt sich z.B. Harnstoff unter Freisetzung von basischem Ammoniak, wodurch auch potentiell bei der Hydrolyse eingesetzte Säure neutralisiert werden kann. Für den Fall, dass die Erhitzungstemperatur 100 °C oder mehr beträgt, erfolgt das Temperieren bevorzugt mittels hydrothermalen Erhitzens (siehe unten) in einer gasdicht verschlossenen Reaktorkammer, um ein vorzeitiges Entfernen der flüssigen Phase aus dem Silikagel zu vermeiden.

Das Freisetzen der Base führt zu einer Aufweitung der Poren (d.h. sowohl der Primärporen als auch der Sekundärporen), wodurch die beim Entfernen der flüssigen Phase aus dem Silikagel auftretenden Kapillarkräfte zusätzlich verringert werden können und somit die Rissbildung zusätzlich unterdrückt werden kann.

Erfindungsgemäß erfolgt das Temperieren mittels hydrothermalen Erhitzens des Silikagel-Formkörpers in einer gasdichten Reaktorkammer auf eine Erhitzungstemperatur von mindestens 100 °C. Die Temperatur während des hydrothermalen Erhitzens weist bevorzugt einen Wert von über 100 °C, bevorzugt zwischen 100 °C und 140 °C, auf; wobei der Silikagel-Formkörper für eine Dauer von 10 bis 48 Stunden auf der vorgegebenen Erhitzungstemperatur gehalten wird. Beim hydrothermalen Erhitzen erfolgt ein Temperieren des Silikagel-Formkörpers bei der vorgegebenen Erhitzungstemperatur bei einem derart hohen Druck, dass die flüssige Phase des Silikagels aufgrund des (erhöhten) Drucks im flüssigen Aggregatzustand verbleibt und nicht verdampft.

Es kann z.B. vorgesehen sein, das hydrothermale Erhitzen ohne externe Druckbeaufschlagung durchzuführen, wobei die Druckerhöhung in der gasdichten Reaktorkammer ausschließlich aufgrund der Temperaturerhöhung erfolgt, wobei der Druck (z.B. durch entsprechende Einstellung der Temperatur und der Größe der Reaktorkammer) während des hydrothermalen Erhitzens bevorzugt einen Wert zwischen 1 bar und 30 bar aufweist. Zum Gewährleisten eines ausreichend hohen Drucks ist die Reaktorkammer in diesem Fall bevorzugt derart ausgebildet und auf das Volumen des herzustellenden Formkörpers abgestimmt, dass während des hydrothermalen Erhitzens das freie (d.h. nicht von dem Silikagel-Formkörper oder der Gießform eingenommene) Volumen der Reaktorkammer maximal 50% des Volumens des herzustellenden Wärmedämmstoff-Formkörpers beträgt.

Mittels des hydrothermalen Erhitzens erfolgt eine Aufweitung der Poren (d.h. sowohl der Primärporen als auch der Sekundärporen), wodurch die beim Entfernen der flüssigen Phase aus dem Silikagel auftretenden Kapillarkräfte verringert werden können. Das hydrothermale Erhitzen kann sowohl für den Fall, dass das Ausgangsmaterial keinen Basenprekursor enthält, als auch für den Fall, dass das Ausgangsmaterial einen Basenprekursor enthält, vorgesehen sein. Falls das Ausgangsmaterial einen Basenprekursor enthält, wird die während des hydrothermalen Erhitzens vorliegende Erhitzungstemperatur derart hoch eingestellt, dass sie mindestens 100 °C beträgt und zugleich mindestens der Aktivierungstemperatur des Basenprekursors entspricht.

Gemäß einer weiteren Ausführungsform weist das Verfahren nach dem Temperieren bzw. Erhitzen den Schritt des Waschens des Silikagel-Formkörpers in Wasser auf, wobei die flüssige Phase des Silikagel-Formkörpers (die z.B. mit Säureanteilen, Polymeranteilen und/oder den Zersetzungsprodukten des Basenprekursors bzw. Alkoholen aus der Hydrolyse der SiO₂-Prekursoren verunreinigt sein kann) zumindest teilweise durch (reines) Wasser ersetzt wird. Es kann z.B. vorgesehen sein, den Silikagel-Formkörper nach dem Temperieren abkühlen zu lassen (z.B. auf Raumtemperatur von 20 °C), gegebenenfalls aus der Reaktorkammer zu entfernen, und anschließend in Wasser zu waschen, wobei als Wasser bevorzugt destilliertes Wasser verwendet wird.

Alternativ oder zusätzlich dazu kann vorgesehen sein, den Silikagel-Formkörper in einer Austauschflüssigkeit zu waschen bzw. zu spülen, die eine geringere Polarität und/oder eine geringere Verdampfungstemperatur aufweist als Wasser, wobei die flüssige Phase des Silikagel-Formkörpers (mittels Diffusionsprozessen) zumindest teilweise durch die Austauschflüssigkeit ersetzt wird. Als Austauschflüssigkeiten können z.B. Ethanol, Pentan oder Methyl-tert-Butylether verwendet werden. Die Austauschflüssigkeit ist bevorzugt eine unpolare Flüssigkeit. Es kann insbesondere vorgesehen sein, den Silikagel-Formkörper erst in bzw. mit Wasser zu waschen und anschließend in bzw. mit der Austauschflüssigkeit zu waschen. Indem die Austauschflüssigkeit eine geringere Polarität als Wasser aufweist, können die beim Entfernen der flüssigen Phase aus dem Silikagel auftretenden Kapillarkräfte zusätzlich reduziert werden.

Gemäß einer weiteren Ausführung weist das Verfahren ferner den Schritt des Trocknens des Silikagel-Formkörpers auf, wodurch der eigentliche Wärmedämmstoff-Formkörper ausgebildet wird. Beim Trocknen wird die flüssige Phase, insbesondere durch Verdunstung, aus dem offenzelligen Porennetzwerk des Silikagels entfernt. Das Trocknen kann z.B. durch Lagern des Silikagel-Formkörpers bei Normaldruck von 1 bar (z.B. an der Luft) aber auch bei demgegenüber leicht reduziertem Druck erfolgen; wobei zusätzlich vorgesehen sein kann, den Silikagel-Formkörper leicht zu erwärmen, z.B. auf eine Temperatur von 30 °C bis 80 °C.

Aufgrund der resultierenden bimodalen Porenstruktur ist keine überkritische Trocknung des Silikagels erforderlich, sondern das Trocknen des Silikagel-Formkörpers kann bei Vorliegen unterkritischer Parameter der flüssigen Phase des Silikagels erfolgen. Während des Trocknens kann also die Temperatur unterhalb der kritischen Temperatur und/oder der Druck unterhalb des kritischen Drucks der flüssigen Phase des Silikagels (bzw. von Wasser als deren Hauptbestandteil) gehalten werden, ohne die Struktur der festen Phase des Silikagel-Formkörpers durch die Trocknung wesentlich zu beeinträchtigen.

Nach der Trocknung liegt ein monolithischer Formkörper aus einem porösen Material vor, das sehr gute Wärmedämmeigenschaften aufweist; wobei die Geometrie des Formkörpers durch die Geometrie der verwendeten Gießform vorgegeben ist. Dieser Wärmedämmstoff-Formkörper kann z.B. direkt zur Wärmedämmung verwendet werden oder in mehrere Wärmedämmkörper (z.B. Wärmedämmplatten) zerlegt werden. Der Wärmedämmstoff-Formkörper kann z.B. als eine Wärmedämmstoff-Platte ausgebildet werden. Unter einem Wärmedämmstoff-Formkörper wird vorliegend ein Formkörper aus einem wärmedämmenden Material verstanden, der zur Verwendung als Wärmedämmung (z.B. bei Gebäuden) einsetzbar ist oder in mehrere zur Verwendung als Wärmedämmung einsetzbare Wärmedämmkörper zerlegbar ist. Der Wärmedämm-Formkörper kann demgemäß z.B. in zumindest einer Raumdimension eine Abmessung von mehr als 20 cm, bevorzugt mehr als 50 cm, aufweisen.

Nach dem Trocknen kann ferner eine thermische Nachbehandlung des getrockneten Monolithen bzw. Wärmedämmstoff-Formkörpers erfolgen; wobei der getrocknete Monolith für eine Dauer von 30 Minuten bis 24 Stunden einer Temperatur von 200 °C bis 700 °C ausgesetzt wird. Es wurde festgestellt, dass eine derartige thermische Nachbehandlung die Wärmeleitfähigkeit des Wärmedämm-Formkörpers weiter reduziert und die mechanische Stabilität des Wärmedämm-Formkörpers weiter erhöht (was z.B. auf Entfernen von Restflüssigkeit und/oder thermisch induzierte Umordnungen zurückzuführen sein kann).

Hinsichtlich der zur Herstellung des Wärmedämmstoff-Formkörpers verwendeten Reaktanten kann als Beispiel folgende Zusammensetzung vorgesehen sein: 25 - 40 (bevorzugt ca. 36) Masseprozent einer Silikatquelle, z. B. Tetramethylorthosilikat, als Silikaprekursor; 7-10 (bevorzugt ca. 8,5) Masseprozent Harnstoff als Basenprekursor; 30 - 60 (bevorzugt ca. 45) Masseprozent Wasser zur Hydrolyse; 4 - 6 (bevorzugt ca. 5) Masseprozent einer Säure zur Unterstützung der Hydrolyse; sowie 1,5 - 9 (bevorzugt ca. 5,5) Masseprozent Polyethylenoxid als Polymer zum Auslösen der polymerinduzierten Phasenseparation.

Um die Durchlässigkeit des Wärmedämmstoff-Formkörpers für Infrarotstrahlung zu reduzieren, kann zudem vorgesehen sein, den Wärmedämmstoff-Formkörper mit einem Infrarot-Trübungsmittel bzw. Infrarot-Blocker zu versehen, wodurch der Wärmeübertrag durch Infrarotstrahlung effektiv unterdrückt werden kann. Es kann z.B. vorgesehen sein, ein Infrarot-Trübungsmittel durch Cogelieren während des Gelierens des Silikagels in dasselbe eizubringen und/oder ein Infrarot-Trübungsmittel durch eine (zumindest teilweise) Verkohlung bzw. Pyrolyse des zur Phasenseparation dienenden Polymers zu erzeugen.

Alternativ oder zusätzlich dazu kann (z.B. für Anwendungen in feuchter Umgebung) vorgesehen sein, den Wärmedämmstoff-Formkörper zumindest abschnittsweise zu hydrophobieren. Es kann z.B. vorgesehen sein, den Wärmedämmstoff-Formkörper an dessen Außenfläche bzw. in einem oberflächennahen Bereich zu hydrophobieren. Die Hydrophobierung kann z.B. während der Herstellung des Wärmedämmstoff-Formkörpers durch Verwendung geeigneter Silikaprekursoren (z.B. alkylsubstituierter Silane, z.B. Methyltrimethoxysilan oder Dimethyldiethoxysilan) oder nach der Herstellung des Wärmedämmstoff-Formkörpers mittels Silanisierung erzielt werden.

Die mittels des Verfahrens hergestellten Wärmedämmstoff-Formkörper weisen eine geringe Wärmeleitfähigkeit und eine hohe mechanische sowie chemische Stabilität auf und sind nicht brennbar. Die Porengröße der Primärporen und der Sekundärporen sowie das Verhältnis des von den Primärporen und den Sekundärporen eingenommenen Volumens lassen sich durch die Wahl der Reaktanten und die Einstellung der jeweiligen Reaktionsparameter (insbesondere Druck, Temperatur und Reaktionsdauer) gezielt beeinflussen bzw. einstellen; wobei z.B. die Porengröße der ersten Porenspezies durch den gewählten Silikaprekursor und die Porengröße der Sekundärporen durch die Art und den Mengenanteil des Polymers beeinflusst werden können. Durch die vorstehend angegebenen Verfahrensabläufe und Verfahrensparameter können die Poren des Primärporennetzwerks mit einem mittleren Durchmesser von 1 nm bis 100 nm und die Poren des Sekundärporennetzwerks mit einem mittleren Porendurchmesser von 500 nm bis 20 µm ausgebildet werden, wobei die Primärporen und die Sekundärporen eine offenzellige, bimodale, hierarchische Porenstruktur bilden. Die derart hergestellten Wärmedämmstoff-Formkörper können zudem bei einer Porosität von 70 % bis 95 % mit einer geringen Wärmeleitfähigkeit von 0,01 bis 0,02 Wm⁻¹K⁻¹ und einer hohen mechanischen Stabilität mit einer zulässigen Druckbelastung von 0,05 bis 2 MPa ausgebildet werden.

Gemäß einem weiteren Aspekt der Erfindung wird ein Wärmedämmstoff-Formkörper bereitgestellt, wobei der Wärmedämmstoff-Formkörper insbesondere mittels eines Verfahrens gemäß einer der vorstehend beschriebenen Ausführungsformen hergestellt werden kann. Die mit Bezug auf das Verfahren beschriebenen Gegenstandsmerkmale gelten somit analog für den Wärmedämmstoff-Formkörper, sodass derselbe im Folgenden nur knapp erläutert wird und im Übrigen diesbezüglich auf die Erläuterungen hinsichtlich des Herstellungsverfahrens verwiesen wird.

Der Wärmedämmstoff-Formkörper weist somit eine offenzellige Porenstruktur mit Primärporen und Sekundärporen als Porenspezies auf, wobei die Primärporen einen kleineren Porendurchmesser bzw. eine kleinere Porengröße aufweisen als die Sekundärporen, und wobei die Wände zwischen benachbarten Sekundärporen mit den Primärporen durchsetzt sind.

Gemäß einer Ausführungsform weisen die Primärporen einen mittleren Porendurchmesser mit einem Wert von 1 nm bis 100 nm auf, wohingegen die Sekundärporen einen mittleren Porendurchmesser mit einem Wert von 500 nm bis 20 µm aufweisen. Die Porosität des Wärmedämmstoff-Formkörpers kann einen Wert von 70 % bis 95 % aufweisen.

Gemäß einer Ausführungsform ist der Wärmedämmstoff-Formkörper (durch entsprechende Wahl der Herstellungsparameter) derart ausgebildet, dass die Sekundärporen mindestens die Hälfte des Hohlraumvolumens des Wärmedämmstoff-Formkörpers bilden. Durch den hohen Anteil an Sekundärporen kann während der Herstellung z.B. das Entfernen der Flüssigkeit aus dem Silikagel ohne Rissbildung unterstützt werden, zudem ist dadurch eine geringe Wärmeleitfähigkeit bzw. eine gute Wärmedämmung gewährleistet.

Die Erfindung wird nachfolgend anhand von Ausführungsbeispielen und Vergleichsbeispielen mit Bezug auf die beiliegenden Figuren veranschaulicht, wobei gleiche oder ähnliche Merkmale mit gleichen Bezugszeichen versehen sind; hierbei zeigen schematisch:
- Figur 1: eine Darstellung eines Reaktors mit einer Gießform zur Veranschaulichung eines Verfahrens gemäß einer Ausführungsform zum Herstellen eines Wärmedämmstoff-Formkörpers; und
- Figur 2: eine Porenstruktur eines Wärmedämmstoff-Formkörpers gemäß einer Ausführungsform.

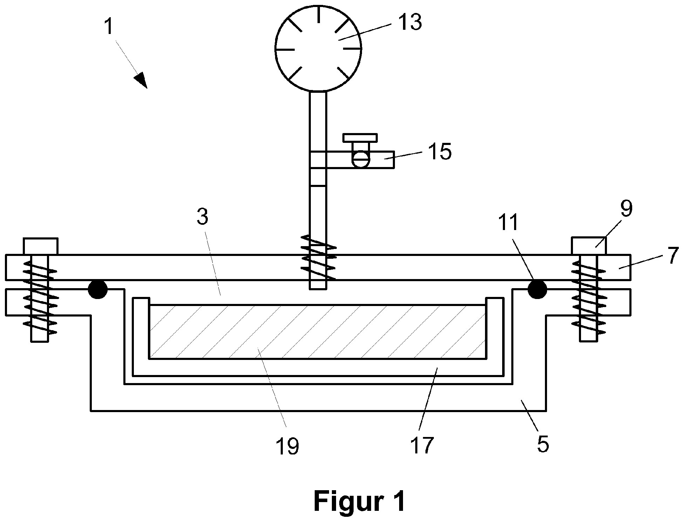

Figur 1 zeigt einen als Druckbehälter fungierenden Reaktor 1 zur Durchführung eines Herstellungsverfahrens gemäß einer Ausführungsform. Von dem Reaktor 1 ist eine gasdicht bzw. luftdicht verschließbare Reaktorkammer 3 gebildet. Der Reaktor 1 weist insbesondere einen Grundkörper 5 und einen Deckel 7 auf, wobei der Deckel 7 mittels mehrerer Schrauben 9 und einer umlaufenden Dichtung 11 ein gas- und druckdichtes Verschließen der Reaktorkammer 3 ermöglicht. Der Reaktor weist zudem eine Temperiervorrichtung auf (nicht dargestellt), mittels derer die Reaktorkammer auf eine vorgegebene Temperatur temperiert werden kann; wobei die Temperiervorrichtung eine Heizvorrichtung und optional eine Kühlvorrichtung aufweist. Der in der Reaktorkammer 3 vorherrschende Druck kann mittels eines Manometers 13 überwacht und mittels einer Regelvorrichtung 15 (manuell oder automatisch) auf die erforderlichen Werte eingestellt werden, z.B. mittels Ablassens von Gas aus der Reaktorkammer unter Druckreduzierung und/oder mittels Einbringens von Gas in die Reaktorkammer unter Druckerhöhung. In Figur 1 ist zudem eine in der Reaktorkammer 3 aufgenommene Gießform 17 dargestellt, die zum Formen des hydrolysierten Ausgangsmaterials bzw. Silikagels 19 unter Ausbildung eines entsprechend geformten Silikagel-Formkörpers vorgesehen ist.

Im Folgenden sind drei Beispiele für die Herstellung eines Wärmedämmstoff-Formkörpers mittels des in Figur 1 gezeigten Reaktors 1 aufgeführt.

### Beispiel 1

Eine Mischung aus 160 g Polyethylenoxid (als Polymer), 1440 g Wasser, 98 g Schwefelsäure und 258 g Harnstoff (als Basenprekursor) wird homogenisiert. Zusammen mit 1166 g Tetraethylorthosilikat (als Silikaprekursor) wird die derart hydrolysierte Reaktionsmischung in die Gießform 17 eingebracht und in der Reaktorkammer 3 unter Luftabschluss bei einer Geliertemperatur von 50 °C in der Gießform 17 für 24 Stunden zur Gelierung gebracht, wodurch ein der Geometrie der Gießform 17 entsprechender Silikagel-Formkörper ausgebildet wird. Anschließend erfolgt ein hydrothermales Erhitzen des derart gebildeten Silikagel-Formkörpers, indem die gasdicht geschlossene Reaktorkammer 3 für die Dauer von 24 Stunden auf eine Erhitzungstemperatur von 100 °C gebracht wird. Danach wird auf eine Temperatur von 20 °C abgekühlt und der derart behandelte Silikagel-Formkörper wird aus der Reaktorkammer 3 entnommen, mit destilliertem Wasser gewaschen und anschließen bei Normaldruck von 1 bar unter Ausbildung eines monolithischen Wärmedämmstoff-Formkörpers getrocknet. Der getrocknete Monolith wird für 10 Stunden einer thermischen Behandlung bei 500 °C unterzogen.

### Vergleichsbeispiel 2

Eine Mischung aus 136 g Polyethylenoxid (als Polymer), 1500 g Wasser, 126 g Salpetersäure und 200 g Harnstoff (als Basenprekursor) wird zusammen mit 840 g Tetramethylorthosilikat (als Silikaprekursor) homogenisiert. Die derart erhaltene Reaktionsmischung wird in der Gießform 17 bei einer Geliertemperatur von 60 °C für 18 Stunden unter Ausbildung eines Silikagel-Formkörpers zur Gelierung gebracht. Danach wird der Silikagel-Formkörper zunächst mit Wasser und nachfolgend mit einer (im Wesentlichen) unpolaren Austauschflüssigkeit (z.B. Ethanol) gewaschen bzw. darin gespült, wobei die flüssige Phase des Silikagels großteils zunächst durch das Wasser und anschließend durch die Austauschflüssigkeit ersetzt wird. Anschließend wird der Silikagel-Formkörper einer Trocknung unterzogen, wodurch ein monolithischer Wärmedämmstoff-Formkörper ausgebildet wird. Der getrocknete Monolith wird für 6 Stunden einer thermischen Behandlung bei 400 °C unterzogen.

### Vergleichsbeispiel 3

Eine Mischung aus 5,5 Ma.-% (Masseprozent) Polyethylenoxid, 45 Ma.-% Wasser, 8,5 Ma.-% Harnstoff und 5 Ma.-% Mineralsäure wird homogenisiert. Nach Zugabe der Silikatquelle (36 Ma.-%) wird die Reaktionsmischung unter Ausbildung eines Silikagel-Formkörpers geliert und unter Druck (1 - 20 bar) bei einer Temperatur von 20° - 140°C hydrothermal erhitzt. Anschließend wird mit polaren Lösungsmitteln gewaschen und diese gegen unpolare Lösungsmittel ausgetauscht. Der resultierende Monolith wird mit einer Mischung aus unpolaren Lösungsmitteln und organofunktionalisierten Silanen bei 50°-130°C für 1 - 36 Stunden zur Reaktion gebracht, um die Oberfläche zu hydrophobieren. Danach wird der Monolith getrocknet. Es folgt eine thermische Behandlung bei 150 - 200°C für 1-10 Stunden.

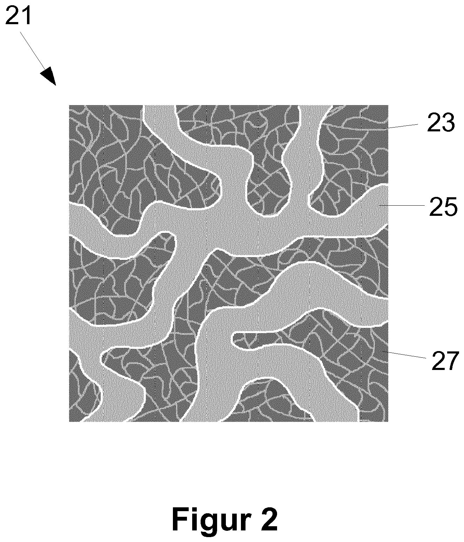

Figur 2 veranschaulicht als Schnittdarstellung schematisch die Porenstruktur eines nach den vorstehenden Herstellungsverfahren hergestellten Wärmedämmstoff-Formkörpers 21. Der Wärmedämmstoff-Formkörper 21 weist ein offenzelliges Porennetzwerk mit Primärporen 23 und Sekundärporen 25 auf, wobei die Primärporen 23 einen wesentlich kleineren Porendurchmesser aufweisen als die Sekundärporen 25. Die Silikaphase 27 ist von den kleineren Primärporen 23 durchsetzt, wobei die größeren Sekundärporen 25 wiederum von der mit den Primärporen 23 durchsetzten Silikaphase 27 gebildet sind. Das von den Primärporen 23 und den Sekundärporen 25 gebildete Porennetzwerk weist somit eine bimodale, hierarchische Struktur auf. In Figur 2 ist die Porenphase hellgrau und die Silikaphase dunkelgrau dargestellt.

### Liste der verwendeten Bezugszeichen

- 1: Reaktor / Druckbehälter
- 3: Reaktorkammer
- 5: Reaktor-Grundkörper
- 7: Reaktor-Deckel
- 9: Schraube
- 11: Dichtung
- 13: Manometer
- 15: Druck-Regelvorrichtung
- 17: Gießform
- 19: hydrolysiertes Ausgangsmaterial / Silikagel
- 21: Wärmedämmstoff-Formkörper
- 23: Primärpore
- 25: Sekundärpore
- 27: Silikaphase

## Patentansprüche

1. Verfahren zum Herstellen eines monolithischen Wärmedämmstoff-Formkörpers (21), aufweisend folgende Schritte:
- Bereitstellen eines Ausgangsmaterials, das mindestens einen Silikaprekursor enthält;
- Hydrolysieren des Ausgangsmaterials;
- Auslösen einer polymerinduzierten Phasenseparation in dem hydrolysierten Ausgangsmaterial durch Zusatz eines Polymers;
- Gelieren des hydrolysierten Ausgangsmaterials in einer Gießform (17), von der die Form des Wärmedämmstoff-Formkörpers (21) definiert ist, bei einer Geliertemperatur unter Ausbildung eines Silikagel-Formkörpers;
- Temperieren des Silikagel-Formkörpers bei einer Erhitzungstemperatur, die grö-ßer ist als die Geliertemperatur; und
- Trocknen des Silikagel-Formkörpers unter Ausbildung des Wärmedämmstoff-Formkörpers (21),
**dadurch gekennzeichnet, dass**
- das Temperieren mittels hydrothermalen Erhitzens in einer gasdichten Reaktorkammer (3) durchgeführt wird, wobei die Erhitzungstemperatur mindestens 100 °C beträgt.

2. Verfahren nach Anspruch 1, wobei das Polymer dem Ausgangsmaterial vor Durchführen der Hydrolyse zugesetzt wird.

3. Verfahren nach Anspruch 1 oder 2, wobei die Geliertemperatur kleiner als 100 °C ist.

4. Verfahren nach einem der Ansprüche 1 bis 3, wobei das Ausgangsmaterial einen Basenprekursor enthält, von dem oberhalb einer vorgegebenen Aktivierungstemperatur eine Base freigesetzt wird, und wobei die beim Gelieren des hydrolysierten Ausgangsmaterials vorliegende Geliertemperatur kleiner ist als die Aktivierungstemperatur und die beim hydrothermalen Erhitzen des Silikagel-Formkörpers vorliegende Erhitzungstemperatur mindestens so groß ist wie die Aktivierungstemperatur.

5. Verfahren nach einem der Ansprüche 1 bis 4, ferner aufweisend das Waschen des Silikagel-Formkörpers nach dem Temperieren in Wasser, wobei die flüssige Phase des Silikagel-Formkörpers durch Wasser ersetzt wird.

6. Verfahren nach einem der Ansprüche 1 bis 4, ferner aufweisend das Waschen des Silikagel-Formkörpers nach dem Temperieren in einer Austauschflüssigkeit, die eine geringere Polarität als Wasser aufweist, wobei die flüssige Phase des Silikagel-Formkörpers durch die Austauschflüssigkeit ersetzt wird.

7. Wärmedämmstoff-Formkörper (21) hergestellt nach einem der Ansprüche 1 bis 6, wobei der Wärmedämmstoff-Formkörper (21) eine offenzellige Porenstruktur mit Primärporen (23) und Sekundärporen (25) als Porenspezies aufweist, wobei die Primärporen (23) einen mittleren Porendurchmesser zwischen 1 nm und 100 nm und die Sekundärporen (25) einen mittleren Porendurchmesser zwischen 500 nm und 20 µm aufweisen, und wobei die Wände zwischen benachbarten Sekundärporen (25) mit den Primärporen (23) durchsetzt sind.

8. Wärmedämmstoff-Formkörper (21) nach Anspruch 7, wobei die Sekundärporen (25) mindestens die Hälfte des Hohlraumvolumens des Wärmedämmstoff-Formkörpers (21) bilden.

9. Wärmedämmstoff-Formkörper (21) nach Anspruch 7 oder 8, aufweisend eine Porosität von 70 % bis 95 %.

## Claims

1. A method for producing a monolithic moulded body (21) made of heat insulating material, comprising the following steps:
- providing a starting material containing at least one silica precursor;
- hydrolysing the starting material;
- triggering a polymer-induced phase separation in the hydrolysed starting material by addition of a polymer;
- gelling the hydrolysed starting material in a mould (17), by means of which the shape of the moulded body (21) made of heat insulating material is defined, at a gelling temperature so as to form a silica gel moulded body;
- controlling the temperature of the silica gel moulded body to a heating temperature which is greater than the gelling temperature; and
- drying the silica gel moulded body so as to form the moulded body (21) made of heat insulating material,
**characterised in that**
- the temperature control is performed by means of hydrothermal heating in a gas-tight reactor chamber (3), wherein the heating temperature is at least 100°C.

2. The method according to claim 1, wherein the polymer is added to the starting material prior to the hydrolysis being performed.

3. The method according to claim 1 or 2, wherein the gelling temperature is less than 100°C.

4. The method according to any one of claims 1 to 3, wherein the starting material contains a base precursor, from which a base is released above a predefined activation temperature, and wherein the gelling temperature present at the time of the gelling of the hydrolysed starting material is lower than the activation temperature, and the heating temperature present at the time of the hydrothermal heating of the silica gel moulded body is at least the same as the activation temperature.

5. The method according to any one of claims 1 to 4, also comprising, after the temperature control step, a washing of the silica gel moulded body in water, wherein the liquid phase of the silica gel moulded body is replaced by water.

6. The method according to ay one of claims 1 to 4, further comprising, after the temperature control step, a washing of the silica gel moulded body in an exchange liquid which has a lower polarity than water, wherein the liquid phase of the silica gel moulded body is replaced by the exchange liquid.

7. A moulded body (21) made of heat insulating material and produced according to any one of claims 1 to 6, wherein the moulded body (21) made of heat insulating material has an open-cell pore structure with primary pores (23) and secondary pores (25) as pore species, wherein the primary pores (23) have a mean pore diameter between 1 nm and 100 nm and the secondary pores (25) have a mean pore diameter between 500 nm and 20 µm, and wherein the walls between adjacent secondary pores (25) are penetrated by the primary pores (23).

8. The moulded body (21) made of heat insulating material according to claim 7, wherein the secondary pores (25) form at least half of the cavity volume of the moulded body (21) made of heat insulating material.

9. The moulded body (21) made of heat insulating material according to claim 7 or 8, having a porosity of from 70% to 95%.

## Revendications

1. Procédé de fabrication d'un corps moulé d'isolant thermique (21) monolithique, présentant les étapes suivantes :
- mise à disposition d'un matériau de départ, qui contient au moins un précurseur de silice,
- hydrolyse du matériau de départ ;
- déclenchement d'une séparation de phases induite par un polymère dans le matériau de départ hydrolysé par l'addition d'un polymère ;
- gélification du matériau de départ hydrolysé dans un moule (17), par lequel la forme du corps moulé d'isolant thermique (21) est définie, à une température de gélification avec formation d'un corps moulé en silicagel;
- mise en température du corps moulé en silicagel à une température de chauffage qui est supérieure à la température de gélification ; et
- séchage du corps moulé en silicagel, avec formation du corps moulé d'isolant thermique (21),
**caractérisé en ce que**
- la mise en température est effectuée au moyen d'un chauffage hydrothermal dans une chambre de réacteur (3) étanche aux gaz, où la température de chauffage est d'au moins 100 °C.

2. Procédé selon la revendication 1, dans lequel le polymère est ajouté au matériau de départ avant l'exécution de l'hydrolyse.

3. Procédé selon la revendication 1 ou 2, dans lequel la température de gélification est inférieure à 100 °C.

4. Procédé selon l'une des revendications 1 à 3, dans lequel le matériau de départ contient un précurseur de base, duquel une base est libérée au dessus d'une température d'activation prédéfinie, et dans lequel, lors de la gélification du matériau de départ hydrolysé, la température de gélification présente est inférieure à la température d'activation et la température de chauffage présente est, lors du chauffage hydrothermal du corps moulé en silicagel, au moins aussi élevée que la température d'activation.

5. Procédé selon l'une des revendications 1 à 4, présentant en outre le lavage dans de l'eau du corps moulé en silicagel après la mise en température, ce par quoi la phase liquide du corps moulé en silicagel est remplacée par de l'eau.

6. Procédé selon l'une des revendications 1 à 4, présentant en outre le lavage du corps moulé en silicagel après la mise en température dans un liquide d'échange qui présente une polarité inférieure à l'eau, ce par quoi la phase liquide du corps moulé en silicagel est remplacée par le liquide d'échange.

7. Corps moulé d'isolant thermique (21) fabriqué selon l'une des revendications 1 à 6, où le corps moulé d'isolant thermique (21) présente une structure de pores à cellules ouvertes avec des pores primaires (23) et des pores secondaires (25) en tant qu'espèces de pores, où les pores primaires (23) présentent un diamètre de pore moyen entre 1 nm et 100 nm et les pores secondaires (25) un diamètre de pore moyen entre 500 nm et 20 µm, et où les parois voisines entre des pores secondaires (25) et des pores primaires (23) sont percées.

8. Corps moulé d'isolant thermique (21) selon la revendication 7, dans lequel les pores secondaires (25) forment au moins la moitié du volume creux du corps moulé d'isolant thermique (21).

9. Corps moulé d'isolant thermique (21) selon la revendication 7 ou 8, présentant une porosité de 70 % à 95%.
